# EUROPEAN PATENT APPLICATION

(11) **EP 2 237 610 A1**
(43) Date of publication of application: **06.10.2010**
(21) Application number: 09711513.3
(22) Date of filing: 05.02.2009
(51) Int. Cl.: H04W 36/14

(54) **A METHOD AND DEVICE FOR SELECTING NETWORK BY THE USER EQUIPMENT**

(30) Priority: 05.02.2008 CN 200810065361
(71) Applicant: Huawei Technologies Co., Ltd., Longgang District, Shenzhen Guangdong 518129 (CN)
(72) Inventor: WANG, Haining, Shenzhen 518129 (CN); ZHANG, Peng, Shenzhen 518129 (CN)
(74) Representative: Kreuz, Georg Maria
(86) International application number: PCT/CN2009/070365
(87) International publication number: WO 2009/100676

(57) **Abstract**

A method and an apparatus for selecting a network by user equipment (UE) are provided. The method includes the following steps. A connection is established between a UE and a network. The UE receives network selection information from the network-side entity, and selects a network according to the network selection information and network selection information stored in the UE. Optionally, the UE receives network selection information and an indication for selecting a network compulsively from the network-side entity, and selects a network indicated by the indication for selecting a network compulsively to access according to the network selection information. The network selection information is information of the whole or partial networks available for the UE in the current position. A user apparatus and a network selection function apparatus are also provided. By application of the network selecting method of the present invention, the network is capable of controlling the scope of the access network selected by the UE.

## Description

### FIELD OF THE TECHNOLOGY

The present invention relates to the field of mobile communications, and particularly to a method and an apparatus for selecting a network by user equipment (UE).

### BACKGROUND OF THE INVENTION

With the growth in demand for wireless communications services, more and more wireless communications technologies have been or are being put into the stage of practical use, for example, the technologies that have been widely used, such as global system for mobile communications/general packet radio system (GSM/GPRS), universal mobile telecommunication system (UMTS), wireless local area network (WLAN) system, and worldwide interoperability for microwave access (WiMAX) system that is put into the stage of practical use. The wireless access technologies have their own different capabilities and characteristics, for example, the GSM system is capable of providing large-range mobility and good quality of voice service, but has a low data service speed; the UMTS system is capable providing large-range mobility and medium-speed data service, but has a small data service capacity; the WLAN system is capable of providing high-speed wireless data access, but substantially cannot provide mobility, and has a small coverage; and the WiMAX system has a high data service speed and capacity, but can provide merely a medium-area wireless coverage and certain mobility. It can be seen that, an individual wireless communications system cannot meet requirements for wireless communications services of users simultaneously in multiple aspects, that is, high mobility, large coverage, good quality of voice service, and strong data service capability. Therefore, wireless communications networks tend to be integrated gradually, that is, wireless communications networks based on different wireless access technologies coexist in a certain area and serve users together, and provide access capabilities according to the service requirements of the users, that is, select a suitable access network to serve the users.

In an environment in which multiple wireless networks coexist, an important condition of acquiring services from a suitable network by a user is that, user equipment (UE) is capable of knowing wireless networks that the UE can access in the current position, so as to select different access networks according to service requirements.

During the process of implementing the present invention, the inventor of the present invention found that the prior art at least has the following problem. The UE in the prior art scans networks that may exist periodically or un-periodically, and determines a network to access according to the scanning result and user active selection policy, so the control on the networks that the UE can access is neglected, and there is no effective solution schemes for a network to control the UE to select an access network in the prior art.

### SUMMARY OF THE INVENTION

A method and an apparatus for selecting a network are provided by the present invention, so that the network is capable of controlling the scope of the access network selected by the UE.

The embodiments of the present invention provide a method for selecting a network by a UE, where a connection is established between the UE and a network. The method includes the following steps.

The UE receives network selection information from a network-side entity, and selects a network according to the network selection information and a network selection policy that is stored in the UE.

Alternatively, the UE receives network selection information and an indication for selecting a network compulsively from the network-side entity, and selects a network indicated by the indication for selecting a network compulsively to access according to the network selection information.

The network selection information is information of the whole or partial networks available for the UE in the current position.

The embodiments of the present invention further provides a user apparatus includes a network connecting unit, an information receiving unit, and a network selecting unit.

The network connecting unit is configured to establish a connection with a network.

The information receiving unit is configured to receive network selection information from a network selection function entity, in which the network selection information is information of the whole or partial networks available for the user apparatus in the current position.

The network selecting unit is configured to select a network according to the network selection information and a network selection policy stored in the network selecting unit.

The embodiments of the present invention further provides a network selection function apparatus includes an information collecting unit, an information generating unit, and an information delivering unit.

The information collecting unit is configured to collect the information required for generating network selection information for the UE.

The information generating unit is configured to generate network selection information for the UE according to the information from the information collecting unit, where the network selection information is information of the whole or partial networks available for the UE in the current position.

The information delivering unit is configured to provide the network selection information to the UE.

In the embodiments of the present invention, a UE selects a network according to network selection information generated by a network selection function entity, thus providing a solution scheme for a network to control the UE to select an access network.

### BRIEF DESCRIPTION OF THE DRAWINGS

FIG. 1 is a schematic diagram of a process of discovering a network selection function entity by a UE according to Embodiment 1 of the present invention;
FIG. 2 is a schematic diagram of a process of discovering a network selection function entity by a UE according to Embodiment 2 of the present invention;
FIG. 3 is a schematic diagram of a process of discovering a network selection function entity by a UE according to Embodiment 3 of the present invention;
FIG. 4 is a schematic diagram of a process of discovering a network selection function entity by a UE according to Embodiment 4 of the present invention;
FIG. 5 is a schematic diagram of a process of discovering a network selection function entity by a UE according to Embodiment 5 of the present invention;
FIG. 6 is a schematic diagram of a process of discovering a network selection function entity by a UE according to Embodiment 6 of the present invention;
FIG. 7 is a schematic diagram of a process of collecting information by a network selection function entity according to Embodiment 7 of the present invention;
FIG. 8 is a schematic diagram of a process of collecting information by a network selection function entity according to Embodiment 8 of the present invention;
FIG. 9 is a schematic diagram of a process of receiving network selection information by a UE according to Embodiment 9 of the present invention;
FIG. 10 is a schematic diagram of a process of receiving network selection information by a UE according to Embodiment 10 of the present invention;
FIG. 11 is a schematic diagram of a process of receiving network selection information by a UE according to Embodiment 11 of the present invention;
FIG. 12 is a schematic diagram of a process of receiving network selection information by a UE according to Embodiment 12 of the present invention;
FIG. 13 is a schematic structural view of a user apparatus according to Embodiment 13 of the present invention; and
FIG. 14 is a schematic structural view of a network selection function apparatus according to Embodiment 14.

### DETAILED DESCRIPTION OF THE EMBODIMENTS

The technical solution under the present invention is elaborated below with reference to the accompanying drawings. Evidently, the embodiments described below are for the exemplary purpose only, without covering all embodiments of the present invention. Person having ordinary skill in the art can derive other embodiments from the embodiments given herein without making any creative effort, and all such embodiments are covered in the protection scope of the present invention.

An embodiment of the present invention provides a method for selecting a network by a UE. The method includes the following steps. A connection is established between the UE and a network, the UE receives network selection information from the network-side entity, and selects a network according to the network selection information and a network selection policy stored in the UE, where the network selection information is information of the whole or partial networks available for the UE in the current position.

For example, the method for selecting a network by a UE includes the following steps.

In step A, a connection is established between the UE and a network.

In step B, the UE receives network selection information from the network-side entity.

A network-side entity that provides the network selection information (referred to as network selection function entity) may be an entity having network selection function in a core network. The entity may be an individual entity in the network, and may be located in other entity such as a mobile management entity, a service GPRS support node (SGSN), or an internet protocol (IP) gateway.

The network selection information from the network selection function entity may be information of all available access networks of the UE in the current position, or information of one or several access networks available for the UE, for example, information of access network(s) available for the UE according to the capability of supporting the access technique of the UE. The network selection information is generated by the network selection function entity for the UE according to the acquired UE information and/or the access network information. The UE information may include the capability of supporting the access technique of the UE, current position of the UE, UE identifier, user subscription information, and quality of service (QoS) information. The access network information may include one or more of: type of access network, identifier of access network, types and identifiers of other networks connected to the access network, or current loading situation of access network, or QoS information of access network, or physical layer access information of access network, or coverage of access network. Furthermore, when the network selection function entity generates network selection information for the UE, the factors such as local policy and operator's policy can also be taken into consideration.

In step C, the UE selects a network according to the network selection information and a network selection policy that is stored in the UE. The network selection policy stored in the UE may be one or any combination of: (1) network priority policy, for example, a list of the access networks arranged according to the priority, a list of other networks connected to the access network and arranged according to the priority, a list of mobile operating networks arranged according to the priority, a list of operator identifiers arranged according to the priority; (2) policy about whether to support an indication for selecting a network compulsively from a network-side entity; (3) an access technique support required by a specific service, for example, a policy specifying that the real-time video service must be accessed through a WiMAX network, and a policy specifying that the voice service must be accessed through a GSM, wideband CDMA (WCDMA), or long term evolution (LTE) network; (4) policy of QoS, for example, a standard value that the QoS must reach.

The UE may reside in the network continuously or access other networks determined according to the network selection information, or the user may select a network manually according to the network selection information.

Furthermore, after discovering the network selection function entity, the UE receives the network selection information from the network-side entity according to the acquired address information of the entity. If the network selection function entity is an individual entity, the UE acquires the IP address of the network selection function entity. If the network selection function entity is located in other entities such as a mobile management entity, an SGSN, and an IP gateway, the UE acquires the address information of the entity where the network selection function entity is located. It should be noted that, if the entity where the network selection function entity is located and the access network entity has a pre-arranged connection relationship, the access network entity may forward a message between entities where the UE and the network selection function entity are located according to the pre-configured connection relationship, and at this time, it is unnecessary for the UE to acquire the address information of the entity where the network selection function entity is located. For sake of convenient description, in this embodiment of the present invention, by taking the UE acquiring the IP address of the network selection function entity as an example, the process of discovering the network selection function entity by the UE is described.

The present invention further provides a method for selecting a network by a UE, which includes the following steps. A connection is established between the UE and a network. The UE receives network selection information and an indication for selecting a network compulsively from a network-side entity, and selects a network indicated by the indication for selecting a network compulsively to access according to the network selection information. The network selection information is information of the whole or partial networks available for the UE in the current position.

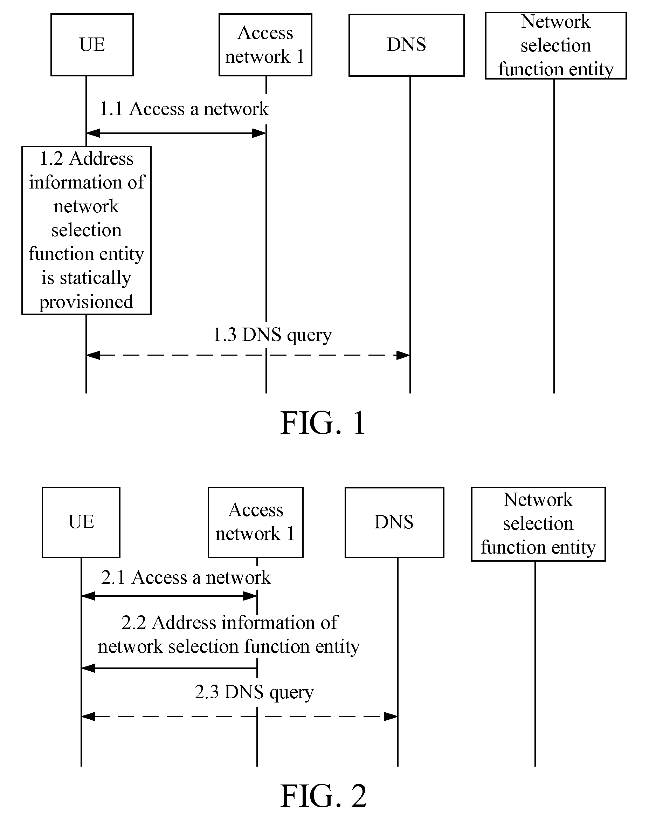

FIG. 1 is a schematic diagram of a process of discovering a network selection function entity by a UE according to Embodiment 1 of the present invention. Referring to FIG. 1, as shown in step 1.1, after being connected to an access network 1, the specific process of discovering the network selection function entity by the UE includes the following steps.

In step 1.2, address information of a network selection function entity is statically provisioned to the UE. The address information may be an IP address of the network selection function entity or a name of the network selection function entity.

If the address information is the name of the network selection function entity, step 1.3 is performed.

In step 1.3, the UE acquires an IP address of the network selection function entity through domain name server (DNS) query.

In this embodiment, the address information of the network selection function entity is statically provisioned to the UE, and thus the UE may read the address information of the network selection function entity at any time as desired without impacting the current signaling process.

FIG. 2 is a schematic diagram of a process of discovering a network selection function entity by a UE according to Embodiment 2 of the present invention. Referring to FIG. 2, as shown in step 2.1, after accessing a communications network through the access network 1, the specific process of discovering the network selection function entity by the UE includes the following steps.

In step 2.2, an access device (for example, a base station) in the access network 1 sends address information of the network selection function entity to a UE through a lower layer message (for example, a layer 2 message), the message may broadcast the address information of the network selection function entity to all the UEs through broadcasting, or send the address information of the network selection function entity to a UE through unicasting. The address information may be an IP address of the network selection function entity, or a name of the network selection function entity. If the address information is the name of the network selection function entity, step 2.3 is performed.

In step 2.3, the UE acquires the IP address of the network selection function entity through DNS query.

In this embodiment, the address information of the network selection function entity may be provisioned from the network-side entity and may be also modified by the network-side entity, and the UE may acquire the address of the network selection function entity during the process of establishing a connection with the network without any additional signaling exchange.

In the following embodiments, the address information of the network selection function entity may be an IP address or a name of the network selection function entity. If the address information of the network selection function entity is the name of the network selection function entity, the UE may acquire the IP address of the network selection function entity through DNS query, which is not repeated herein.

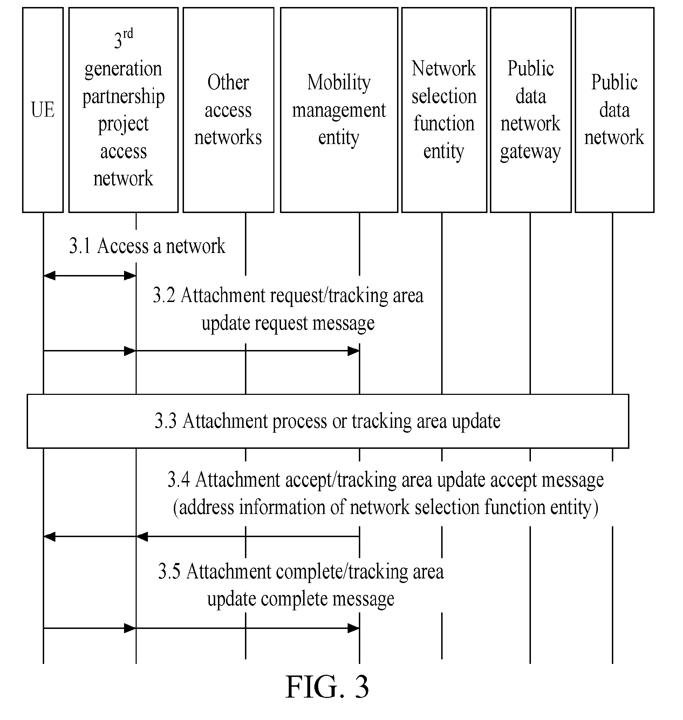

FIG. 3 is a schematic diagram of a process of discovering a network selection function entity by a UE according to Embodiment 3 of the present invention. Referring to FIG. 3, as shown in step 3.1, after being connected to a 3rd generation partnership project (3GPP) access network, the specific process of discovering the network selection function entity by the UE includes the following steps.

In step 3.2, the UE initiates an attachment procedure or tracking area update procedure to a mobile management entity (MME) through a 3GPP access network.

The function of the mobile management entity includes managing and storing information (such as user identifier, mobility state, and security parameters) of the user in the network, allocating a temporary identifier for the user, and performing authentication and authorization checks on the user.

In step 3.3, the UE completes the attachment process or tracking area update procedure, which includes authentication and authorization, position registration, and bearer establishment.

In step 3.4, the mobile management entity sends an attachment accept message or a tracking area update accept message to the UE through the 3GPP access network, where the message carries the address information of the network selection function entity.

In step 3.5, the UE replies an attachment complete message or a tracking area update complete message to the mobile management entity.

Furthermore, in the step 3.2, the UE may carry an indication parameter in an attachment request or tracking area update request message, so as to indicate whether the UE request the mobile management entity to send the address information of the network selection function entity. Accordingly, in the step 3.4, the mobile management entity may determine whether to send the address information of the network selection function entity to the UE according to the indication parameter.

This embodiment is applicable in the case that the UE accesses a network through a 3GPP access network, and during the process of completing the access attachment or position update, the UE may acquire the address information of the network selection function entity without any additional signaling exchange. This embodiment sends the address information of the network selection function entity to the UE by utilizing a current non-access layer message, which is a non-access level solution scheme and has no influence on the current access network.

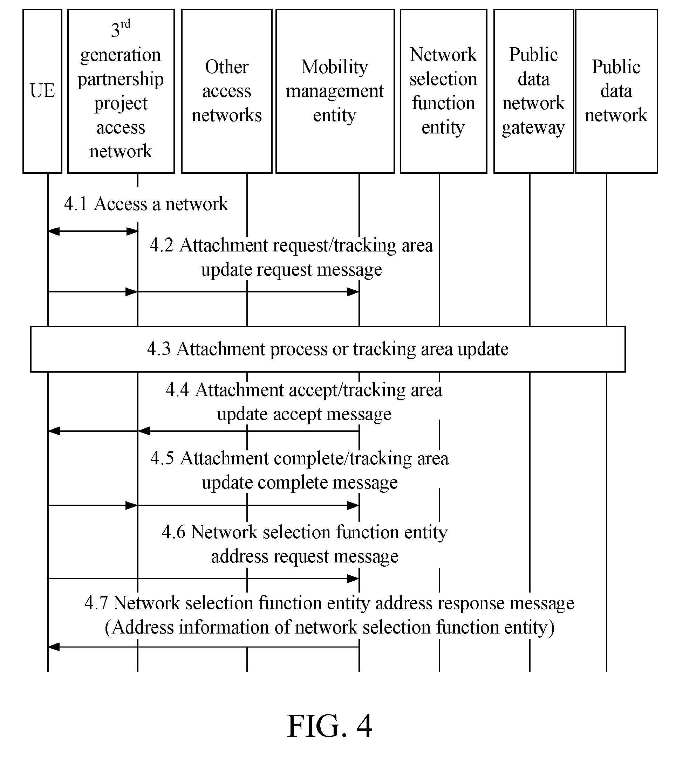

FIG. 4 is a schematic diagram of a process of discovering a network selection function entity by a UE according to Embodiment 4 of the present invention. Referring FIG. 4, as shown in step 4.1, after being connected to a 3GPP access network, the specific process of discovering the network selection function entity by the UE includes the following steps.

Steps 4.2-4.5 are similar to steps 3.2-3.5 in Embodiment 3, except that the attachment accept message or tracking area update accept message sent to the UE by the mobile management entity does not carry the address information of the network selection function entity.

In step 4.6, the UE sends a network selection function entity address request message to the mobile management entity.

In step 4.7, the mobile management entity sends a network selection function entity address response message to the UE, and the message carries the address information of the network selection function entity.

If the address information is the name of the network selection function entity, the UE acquires the IP address of the network selection function entity through DNS query.

This embodiment is applicable in the case that the UE accesses a network through a 3GPP access network, in which the UE utilizes an individual signaling to request the address information of the network selection function entity without impacting other signaling, so that the process of requesting the address information of the network selection function entity by the UE is independent of other processes.

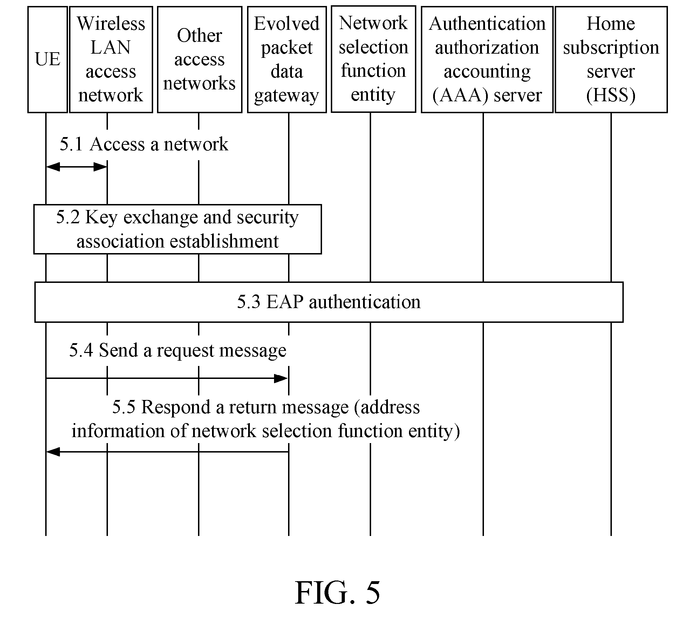

FIG. 5 is a schematic diagram of a process of discovering a network selection function entity by a UE according to Embodiment 5 of the present invention. Referring to FIG. 5, as shown in step 5.1, after being connected to an unreliable access network (such as WLAN access network), the specific process of discovering the network selection function entity by the UE includes the following steps.

In step 5.2, a key exchange is performed and a security association is established between the UE and an evolved packet data gateway (ePDG).

In step 5.3, an extensible authentication protocol (EAP) authentication process born on an internet key exchange version 2 (IKEv2) is performed, so as to authenticate and authorize the UE.

In step 5.4, the UE sends an IKE_AUTH Request message carrying the authentication information to the ePDG.

In step 5.5, the ePDG returns to the UE an IKE_AUTH Response carrying the authentication information and configuration information, and the address information of the network selection function entity as well.

Furthermore, in the step 5.4, the UE may carry an indication parameter in the IKE_AUTH Request message, so as to indicate whether the UE requests the ePDG to send the address information of the network selection function entity. In the step 5.5, the ePDG determines whether to send the address information of the network selection function entity to the UE according to the indication parameter carried in the attachment IKE_AUTH Request message.

If the address information of the network selection function entity determined to be sent to the UE is the name of the network selection function entity, the UE acquires the IP address of the network selection function entity through DNS query.

This embodiment is applicable in the case that the UE accesses a network through an unreliable access network, and the ePDG notifies the UE of the address information of the network selection function entity through an IKE_AUTH message after establishing a channel, which is a non-access level solution scheme and has no influence on the current access network.

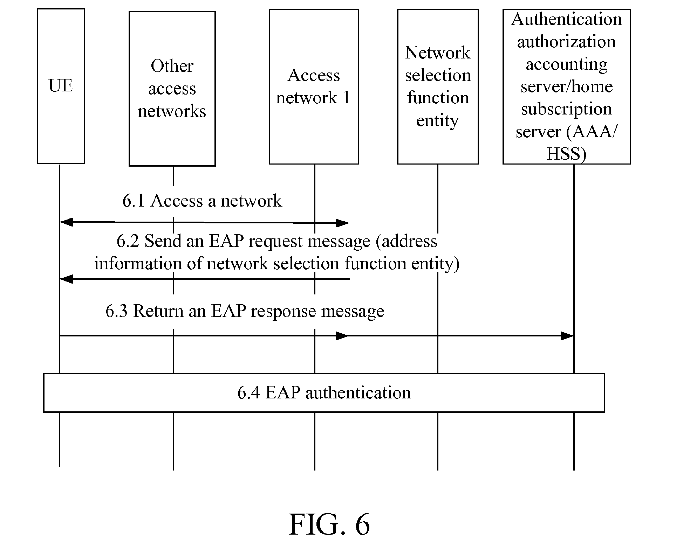

FIG. 6 is a schematic diagram of a process of discovering a network selection function entity by a UE according to Embodiment 6 of the present invention. Referring to FIG. 6, as shown in step 6.1, after being connected to the access network 1, the specific process of fining the network selection function entity by the UE includes the following steps.

In step 6.2, the access network 1 sends an EAP Request/Identity message to the UE, so as to initiate EAP authentication. A null identifier is added at the end of the parameter of the message, and address information of the network selection function entity is also added as one of the parameters carried by the message.

In step 6.3, the UE stores the address information of the network selection function entity, and returns an EAP Response/Identity message, and then the access network 1 delivers the message to an AAA server.

In step 6.4, the UE and the authentication entity of the network-side entity and an authentication authorization accounting server/home subscription server (AAA/HSS) complete the subsequent EAP authentication process.

This embodiment is applicable in the case that the UE accesses a network through an access network in the EAP authentication mode, and through extending the EAP message, an Access Gateway (AGW) brings the address information of the network selection function entity to the UE in an EAP request/identity message, which is a non-access level solution scheme.

In the present invention, the Embodiments 1-6 provide several methods of discovering and selecting a network selection function entity by a UE, so that the UE is capable of actively communicating with the network selection function entity, and furthermore, it is possible for the UE to acquire the network selection information in time and actively.

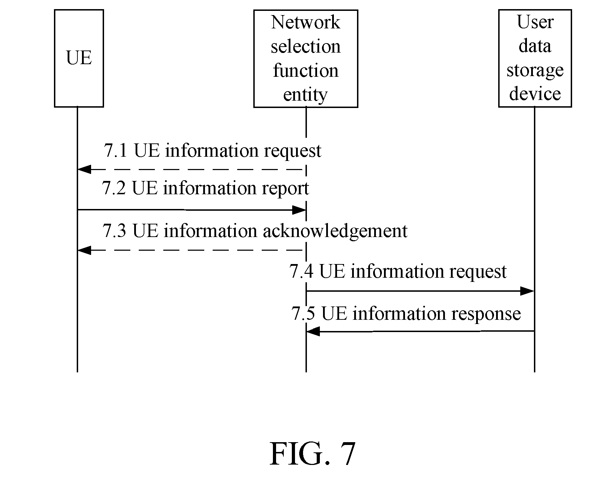

FIG. 7 is a schematic diagram of a process of a network selection function entity collecting information according to Embodiment 7 of the present invention. Referring to FIG. 7, the specific process includes the following steps.

In step 7.1, the network selection function entity sends a UE information request message to the UE. The message may include indication information which indicates information to be reported by the UE.

In step 7.2, the UE sends a UE information report to the network selection function entity. The message may include the contents such as UE identifier, support capability to the access technique of the UE, current position information of the UE, the QoS information, and the content of the message may be set by the UE. Furthermore, if the message in the step 7.1 carries the indication information, the UE reports corresponding information according to the indication.

In step 7.3, the network selection function entity stores the UE information, and returns a UE information acknowledgement message to the UE. Furthermore, the network selection function entity may further generate the network selection information for the UE according to the UE information, and carries the network selection information in the returned message.

In step 7.4, the network selection function entity sends a UE information request message to a user data storage device (such as HSS). The message carries the UE identifier, and may include indication information which indicates information to be returned by the user data storage device as feedback.

In step 7.5, the user data storage device returns a UE information response message to the network selection function entity. The message may include the information such as UE subscription data. Furthermore, if the message in the step 7.4 carries the indication information, the user data storage device returns corresponding information according to the content of the indication information.

The steps above may be performed according to the following combinations: (a) merely performing steps 7.1 and 7.2; (b) merely performing steps 7.2 and 7.3; (c) performing steps 7.1, 7.2, and 7.3 in sequence; and (d) performing steps 7.4 and 7.5 in sequence. According to the actual situation, the system may select one of schemes (a)-(d) for use, or use one of the schemes (a)-(c) and the scheme (d) simultaneously.

This embodiment provides several modes of acquiring the UE information by the network selection function entity, such as requesting to the UE, actively reporting by the UE, requesting to other network devices, and combinations thereof.

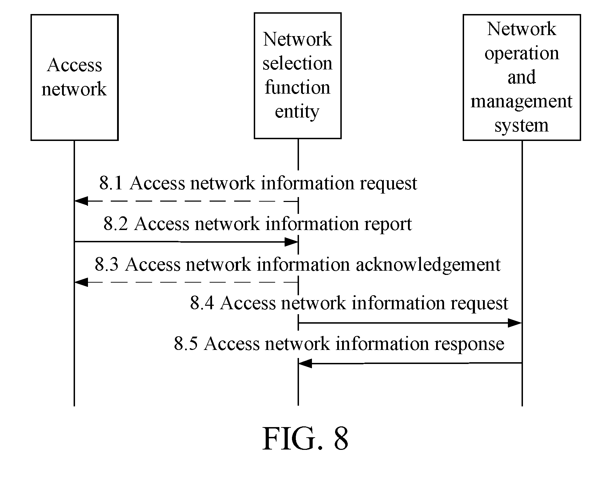

FIG. 8 is a schematic diagram of a process of collecting information by a network selection function entity according to Embodiment 8 of the present invention. Referring to FIG. 8, the specific process includes the following steps.

In step 8.1, the network selection function entity sends an access network information request message to an access network, where the message may further include indication information indicating information to be reported by a receiver.

In step 8.2, the access network sends an access network information report to the network selection function entity. The message may include type of the access network, identifier of the access network, types and identifiers of other networks connected to the access network, the current loading situation of the access network, the QoS information of access network, physical layer access information of access network, or coverage of access network. Further, if the message in the step 8.1 carries the indication information, the access network reports corresponding information according to the indication.

In step 8.3, the network selection function entity stores the access network information and returns an access network information acknowledgement message to the access network. Further, the message may carry network selection information, for example, information of other access network providing coverage and available for the UE in the current position.

In step 8.4, the network selection function entity sends to a network operation and management system a message requesting access network information. The message may carry the identifier of access network, and may further include indication information indicating information to be reported by a receiver.

In step 8.5, the network operation and management system returns the access network information to the network selection function entity, such as, identifier of the access network, the current loading situation of the access network, the QoS information of the access network, and the physical layer access information of the access network. Further, if the message in the step 8.4 carries the indication information, the network operation and management system reports corresponding information according to the indication.

The above steps may be performed according to the following combinations: (a) merely performing steps 8.1 and 8.2; (b) merely performing steps 8.2 and 8.3; (c) performing steps 8.1, 8.2, and 8.3 in sequence; and (d) performing steps 8.4 and 8.5 in sequence. The system may select one of schemes (a)-(d) for use according to the actual situation, or use one of the schemes (a)-(c) and the scheme (d) simultaneously.

This embodiment provides several modes of acquiring the access network information by the network selection function entity, such as requesting to the access network, actively reporting by the access network, requesting to the network operation and management system, and combinations thereof. It should be noted that, the network selection function entity may perform the process of acquiring the access network information after being triggered by messages from other entities. For example, when receiving the message of the UE requesting acquiring the network selection information, the network selection function entity performs the process of acquiring the access network information.

In the present invention, Embodiment 7 and Embodiment 8 provide methods of collecting UE information and access network information by a network selection function entity, so that the network selection function entity is capable of acquiring dynamic information of the UE and the access network in time, furthermore, it is possible for the network selection function entity to generate effective network selection information for the UE in time.

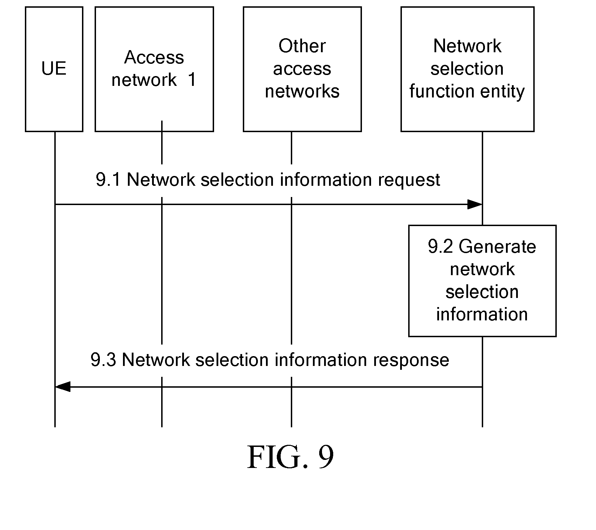

FIG. 9 is a schematic diagram of a process of receiving network selection information by a UE according to Embodiment 9 of the present invention. In this embodiment, the UE may request the network selection function entity for acquiring the network selection information during the process of performing initial access, after completing initial access, during the process of performing position update, or after completing position update. Referring to FIG. 9, the specific process includes the following steps.

In step 9.1, the UE sends a message requesting acquiring the network selection information to the network selection function entity. The message may include the UE information, such as, UE identifier, the support capability to the access technique of the UE, current position information of the UE, and the QoS information.

In step 9.2, the network selection function entity generates network selection information for the UE according to the UE information, the access network information, and the policy on the network selection function entity.

In step 9.3, the network selection function entity returns a network selection information response message to the UE. The message carries the network selection information generated for the UE.

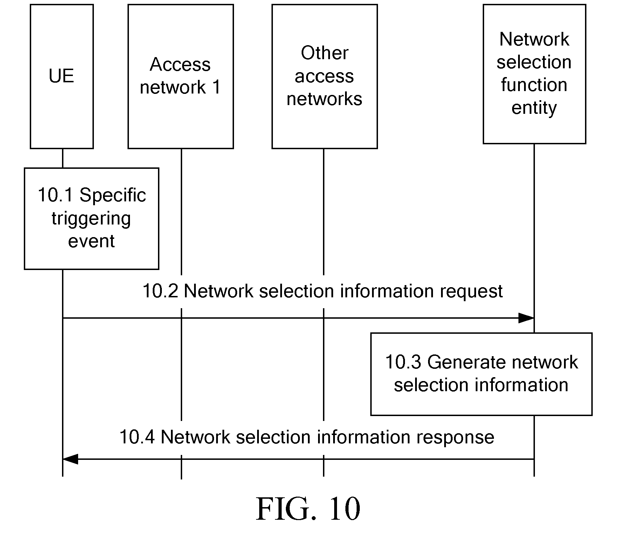

FIG. 10 is a schematic diagram of a process of receiving network selection information by a UE according to Embodiment 10 of the present invention. Referring to FIG. 10, the difference between this embodiment and Embodiment 9 lies in that, after being triggered by a specific event, the UE requests the network selection function entity for the network selection information. The specific event includes, but not limited to, the UE detects that a current network signal is weakened to a certain threshold value, the user selects an access network manually, some specific application program on the UE is started to run, or a specific timer expires. The specific application program includes, but not limited to, an application program requiring high QoS assurance or an application program corresponding to service which merely be provided by a WiMAX or WLAN network. In this embodiment, the specific process of the UE requesting the network selection function entity for the network selection information is as the same as that in Embodiment 9, and thus is not repeated herein.

In this embodiment, the process of acquiring the network selection information by the UE is triggered by a specific event, so as to complete the selection of preferred access network in time, thus improving the quality of communication.

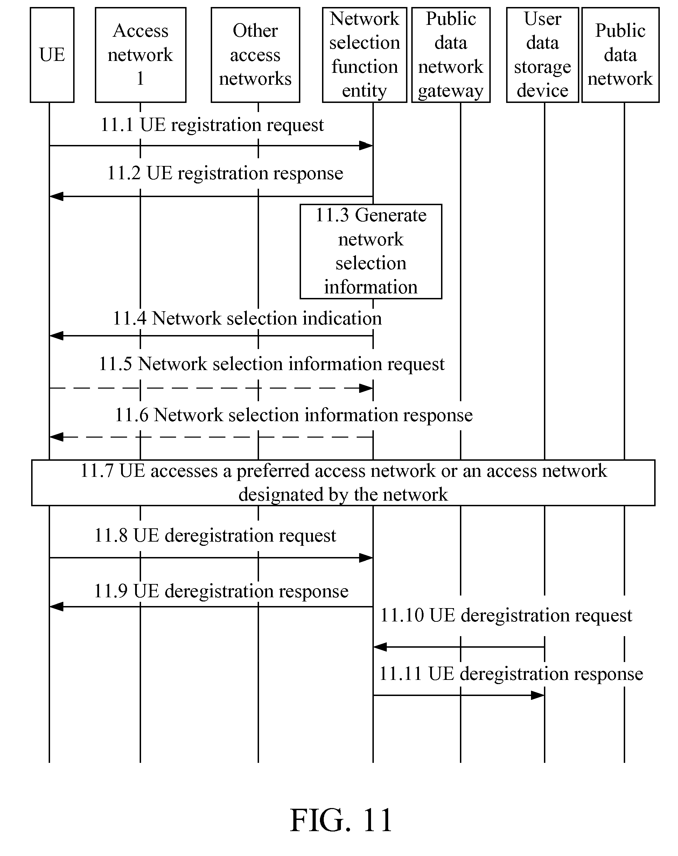

FIG. 11 is a schematic diagram of a process of requesting a network selection function entity for acquiring network selection information by a UE according to Embodiment 11 of the present invention. Referring to FIG. 11, the specific process includes the following steps.

In step 11.1, the UE sends a registration request message to a network selection function entity. The message may carry UE information, for example, UE identifier, support capability to an access technique of the UE, current position information of the UE, or QoS information.

In step 11.2, the network selection function entity stores UE registration information, and sends a registration response message to the UE.

In step 11.3, the network selection function entity generates network selection information for the UE.

In step 11.4, the network selection function entity sends a network selection indication message to the UE. If the content of the message includes the network selection information, the UE receives the information, and the process of acquiring the network selection information is ended. Further, in order to enhance the control capability of the network-side entity on the network selection process, the network-side entity may control the UE to select a specific network. That is to say, the network selection information delivered to the UE by the network selection function entity may be limited to information of a specific access network and access information thereof, and the message may simultaneously carry an indication for selecting a network compulsively as a parameter indicating the UE to move to a specific access network. If the UE supports the network selection controlled by the network, the UE selects the specific network to access according to the network indication.

The step may be performed periodically by the network selection function entity, or be performed by the network selection function entity if a network trigger occurs. The network trigger may be arrival of an indication from a network operation and management system, requirement of access networks to negotiate load, any change in operator's policies, or arrival of any indication from other network entities.

Optionally, if the network selection indication message sent to the UE by the network selection function entity does not include the network selection information, but requires the UE to request for acquiring the network selection information, step 11.5 and step 11.6 are performed.

In step 11.5, the UE sends a network selection information request message to the network selection function entity. The message may carry the UE information, such as, UE identifier, support capability to an access technique of the UE, current position of the UE, and QoS requirement.

In step 11.6, the network selection function entity generates network selection information and sends the network selection information to the UE, that is, the UE completes the process of acquiring the network selection information.

Further, in order to enhance the control capability of the network-side entity on the network selection process, the network-side entity may control the UE to select a specific network. That is to say, the network selection information delivered to the UE by the network selection function entity may be limited to a specific access network and access information thereof, and the message may simultaneously carry a parameter of an indication for selecting a network compulsively indicating the UE to move to a specific access network.

In this embodiment, the network selection function entity actively delivers the network selection information to the UE. At the same time, a method of controlling the UE to select a specific network by the network-side entity is provided, thus enhancing the control capability of the network on the network selection process.

After acquiring the network selection information according to this embodiment, the UE may access a preferred access network or an access network designated by the network, as shown in step 11.7. The UE may further determine whether to continuously receive network selection information. When it is unnecessary for the UE to receive the network selection information or the UE quits the network, the UE may send a deregistration request message to the network selection function entity, and the network selection function entity returns a deregistration response message to the UE and will not send the network selection information to the UE, as shown in steps 11.8-11.9. Alternatively, the user data storage device may send a deregistration request message to the network selection function entity, where the message carries the UE identifier, and the network selection function entity returns a deregistration response message to the user data storage device and will not send the network selection information to the UE, as shown in steps 11.10-11.11.

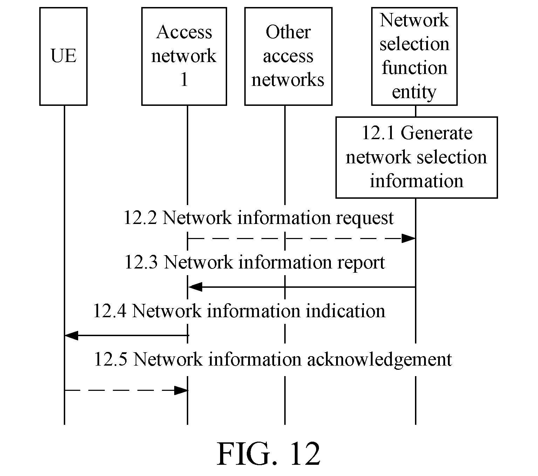

FIG. 12 is a schematic diagram of a process of receiving network selection information by a UE according to Embodiment 12 of the present invention. Referring to FIG. 12, the specific process includes the following steps.

In step 12.1, the network selection function entity generates network selection information for the UE.

In step 12.2, an access network 1 sends a network information request message to the network selection function entity. When the network selection function entity is set to actively deliver the network selection information to the UE, this step is not performed.

In step 12.3, the network selection function entity sends a network information report to the access network 1, which includes identifiers, current loading situations, QoS information, and physical layer access information of all the access networks providing coverage and available for the UE in the current position.

When the UE is connected to the access network 1, the following steps are performed.

In step 12.4, the access network 1 sends the network selection information to the UE.

For example, the access network 1 may send the network selection information to the UE in the following two modes.
Mode 1: The access network encapsulates the network selection information in a protocol message at a layer higher than layer 3, such as, a mobile IP (MIP) message, an extensible authentication protocol (EAP) message, a remote authentication dial in user service (RADIUS) protocol, a DIAMETER (an updated vision of RADIUS protocol) message, or an internet key exchange (IKE) message to send to the UE.
Mode 2: The access network encapsulates the network selection information in an access layer message to send to the UE through broadcasting or unicasting.

Optionally, the UE returns a network information acknowledgement message to the access network, as shown in step 12.5.

The present invention provides a mode of delivering network information to a UE by an access network, that is, a network selection function entity provides network selection information to an access network, and then the access network sends the network selection information to the UE. This embodiment is applicable in the case that the UE cannot directly communicate with a network selection function entity.

Embodiment 9 to Embodiment 12 of the present invention provide methods of generating network selection information for a UE by a network selection function entity, methods of acquiring network selection information by a UE, and methods of utilizing network selection information by a UE, so that the UE is capable of utilizing the network selection information to select suitable network to access in time.

The skilled in the art should understand that, the embodiments of discovering a network selection function entity by a UE, collecting information by a network selection function entity, and receiving network selection information by a UE can be combined and integrated into a specific technical solution of selecting a network by a UE without departing from the protection scope of the present invention.

It should be noted that, the public data networks (PDN) gateway, the PDN, the AAA, the HSS, and the ePDG in the embodiments of the present invention are merely names used for convenient description. The names will not limit the application scope of the embodiments of the present invention, that is to say, in some systems not having the entities in the name of PDN gateway, PDN, AAA, HSS, and PDG, it should not be construed that the technical solution in the embodiments of the present invention is not applicable to the systems.

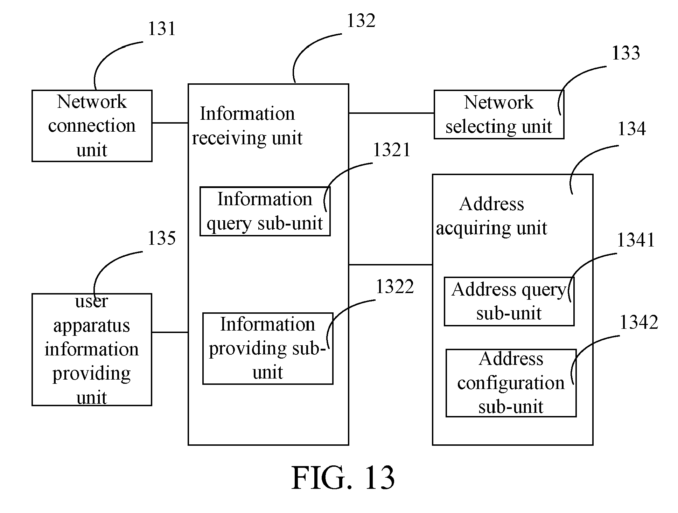

FIG. 13 is a user apparatus according to Embodiment 13 of the present invention. Referring to FIG. 13, the apparatus includes a network connecting unit 131, an information receiving unit 132, and a network selecting unit 133.

The network connecting unit 131 is configured to establish a connection with a network.

The information receiving unit 132 is configured to receive network selection information generated by a network selection function entity. The network selection information is information of the whole or partial networks available for the user apparatus in the current position. The information receiving unit further includes an information query sub-unit 1321, configured to query network selection information to the network selection function entity according to address information of the network selection function entity; and an information providing sub-unit 1322, configured to provide the network selection information to the network selecting unit.

The network selecting unit 133 is configured to select a network according to the network selection information and a network selection policy stored in the network selecting unit. The network selection policy may be one or any combination of: (1) network priority policy, for example, a list of the access networks arranged according to the priority, a list of other networks connected to the access network and arranged according to the priority, a list of mobile operating networks arranged according to the priority, a list of operator identifiers arranged according to the priority; (2) policy about whether to support an indication for selecting a network compulsively from a network-side entity; (3) an access technique support required by a specific service, for example, a policy specifying that the real-time video service must be accessed through a WiMAX network, and a policy specifying that the voice service must be accessed through a GSM, a wideband CDMA (WCDMA), or a long term evolution (LTE) network; and (4) policy of QoS, for example, a standard value that the QoS must reach.

The apparatus may further include an address acquiring unit 134, which is connected to the information receiving unit 132 and configured to acquire the address information of the network selection function entity. The address acquiring unit 134 further includes an address query sub-unit 1341, configured to query the address information of the network selection function entity to a mobile management entity or an ePDG; and an address configuration sub-unit 1342, configured to save the provisioned address information of the network selection function entity.

The apparatus may further include a user apparatus information providing unit 135, which is configured to provide the information of the user apparatus to the network-side entity, such as a network selection function entity. The information of the user apparatus may include support capability to an access technique of the user apparatus, current position of the user apparatus, identifier of the user apparatus, and QoS information.

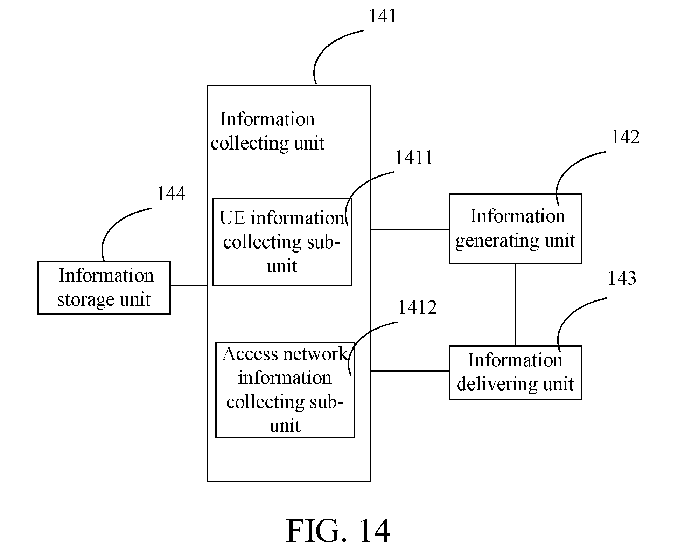

FIG. 14 is a network selection function apparatus according to Embodiment 14 of the present invention. Referring to FIG. 14, the apparatus includes an information collecting unit 141, an information generating unit 142, and an information delivering unit 143.

The information collecting unit 141 is configured to collect information required for generating network selection information for a UE. The information collecting unit further includes a UE information collecting sub-unit 1411, configured to receive UE information, such as support capability to an access technique of the UE, current position of the UE, UE identifier, and QoS information, and further configured to send a UE information query request to the UE or a user data storage device; an access network information collecting sub-unit 1412, configured to receive access network information, such as type of access network, identifier of access network, types and identifiers of other networks connected to the access network, current loading situation of access network, QoS information of access network, physical layer access information of access network, and coverage of access network, and further configured to send an access network information query request to an access device or a network operation and management system in an access network.

The information generating unit 142 is configured to generate network selection information for the UE according to the information from the information collecting unit 141. The network selection information is the information of the whole or partial networks available for the UE in the current position.

The information delivering unit 143 is configured to provide the network selection information generated by the information generating unit 142 to the UE, for example, directly send to the UE, or send to the UE through an access network device.

The apparatus may further include an information storage unit 144, configured to store the information required for generating the network selection information for the UE.

It should be noted that the above descriptions are merely exemplary embodiments of the present invention, and person having ordinary skill in the art may make various improvements and refinements without departing from the principle of the invention. All such modifications and refinements are intended to be covered by the present invention.

## Claims

1. A method for selecting a network by a user equipment (UE), wherein a connection is established between the UE and a network, the method comprises:
receiving, by the UE, network selection information from a network-side entity, and selecting a network according to the network selection information and a network selection policy stored in the UE; or
receiving, by the UE, network selection information and an indication for selecting a network compulsively from a network-side entity, and selecting a network indicated by the indication for selecting a network compulsively to access according to the network selection information;
wherein the network selection information is information of the whole or partial networks available for the UE in the current position.

2. The method according to claim 1, wherein the receiving, by the UE, the network selection information from the network-side entity comprises:
receiving, by the UE, the network selection information from a network selection function wherein address information of the network selection function entity is provisioned to the UE; or
receiving, by the UE, the network selection information from a network selection function wherein address information of the network selection function entity is from an access network entity.

3. The method according to claim 2, wherein the providing, by the network-side entity, the address information of the network selection function entity comprises:
providing, by the network-side entity, the address information of the network selection function entity to the UE by broadcasting or unicasting the address information through an access layer message; or
providing, by the network-side entity, the address information of the network selection function entity to the UE through a layer 3 message or a protocol message at a layer higher than layer 3.

4. The method according to claim 3, wherein
the address information of the network selection function entity is an internet protocol (IP) address of the network selection function entity; or
the address information of the network selection function entity is a name of the network selection function entity, and the UE queries and acquires the IP address of the network selection function entity through a domain name server.

5. The method according to claim 1, wherein the providing, by the network-side entity, the network selection information comprises:
providing, by the network-side entity, the network selection information to the UE if a network trigger occurs.

6. The method according to claim 5, wherein the network trigger comprises at least one of:
arrival of an indication from a network operation and management system, requirement of access networks to negotiate load, any change in operator's policies, and arrival of any indication from other network entities.

7. The method according to claim 1, wherein the providing, by the network-side entity, the network selection information comprises:
providing, by the network-side entity, the network selection information to the UE when the network-side entity receives a request of the UE.

8. The method according to claim 7, wherein
the UE sends the request to the network-side entity during the process of performing initial access, after completing the initial access, during or after the procedure of performing position update, or when being triggered by a specific event.

9. The method according to claim 8, wherein the specific event comprises at least one of:
a current network signal weakened to be lower than a threshold is detected by the UE, or a specific application program is started to run on the UE, or manual selection of an access network on the UE, or a timer expires on the UE;
wherein the specific application program is an application program having specific assurance requirements on quality of service (QoS) or an application program to which a specific network provides corresponding services.

10. The method according to claim 5 or 7, wherein the providing, by the network-side entity, the network selection information comprises:
providing, by the network-side entity, the network selection information to the UE through an access network entity.

11. The method according to claim 10, wherein the providing, by the network-side entity, the network selection information to the UE through the access network entity comprises:
providing, by the network-side entity, the network selection information to the access network entity by replying to a message about the access network entity requesting the network selection information, or periodically sending the network selection information to the access network entity; and
providing, by the access network entity, the network selection information to the UE.

12. The method according to claim 11, wherein the providing, by the access network entity, the network selection information to the UE comprises:
sending, by the access network entity, the network selection information to the UE through an access layer message or a protocol message at a layer higher than layer 3.

13. The method according to claim 12, wherein
the access layer message is broadcast or unicast by the access network entity; or
the protocol message at a layer higher than layer 3 is one of mobile IP information, an extensible authentication protocol (EAP) message, a remote authentication dial in user service (RADIUS) protocol message, a diameter protocol message, and a key exchange message.

14. The method according to claim 1, wherein the network selection information is generated by the network-side entity according to acquired UE information and/or access network information.

15. The method according to claim 14, wherein before the network-side entity generates the network selection information according to the acquired UE information and/or access network information, the method further comprises:
acquiring, by the network-side entity, the UE information through receiving a message sent by the UE or a user data storage device; and/or
acquiring, by the network-side entity, the access network information through receiving a message sent by an access device or a network operation and management system.

16. The method according to claim 1, wherein the network selection policy comprises at least one of:
a network priority policy, a policy of whether supports an indication for selecting a network compulsively provided by the network-side entity, an access technique support required by a specific service, and a policy of quality of service (QoS).

17. A user apparatus, comprising:
a network connecting unit (131), configured to establish a connection with a network;
an information receiving unit (132), configured to receive network selection information from a network selection function entity, wherein the network selection information is information of the whole or partial networks available for the user apparatus in the current position; and
a network selecting unit (133), configured to select a network according to the network selection information and a network selection policy stored in the network selecting unit.

18. The user apparatus according to claim 17, further comprising:
a user apparatus information providing unit (135), configured to provide information of the user apparatus to the network-side entity, wherein the information of the user apparatus comprises support capability to the access technique of the user apparatus, current position of the user apparatus, identifier of the user apparatus, and quality of service (QoS) information.

19. A network selection function apparatus, comprising:
an information collecting unit (141), configured to collect information required for generating network selection information for a user equipment (UE);
an information generating unit (142), configured to generate network selection information for the UE according to information from the information collecting unit (141), wherein the network selection information is information of the whole or partial networks available for the UE in the current position; and
an information delivering unit (143), configured to provide the network selection information to the UE.

20. The network selection function apparatus according to claim 19, wherein the information collecting unit (141) comprises:
a UE information collecting sub-unit (1411), configured to receive UE information, and further configured to send a UE information query request to the UE or a user data storage device; and
an access network information collecting sub-unit (1412), configured to receive access network information, and further configured to send an access network information query request to an access device or a network operation and management system in an access network.
